# EUROPEAN PATENT APPLICATION

(11) **EP 4 459 540 A2**
(43) Date of publication of application: **06.11.2024**
(21) Application number: 24202016.2
(22) Date of filing: 17.03.2020
(51) Int. Cl.: G06Q 50/40

(54) **INFORMATION PROCESSING METHOD AND INFORMATION PROCESSING SYSTEM**

(30) Priority: 28.03.2019 US 201962825373 P; 28.11.2019 JP 2019215367
(62) Divisional of application: 20777718.6
(71) Applicant: Panasonic Intellectual Property Corporation of America, Torrance, CA 90504 (US)
(72) Inventor: OHNISHI, Ryota, Osaka, 571-0057 (JP); URABE, Hiroaki, Osaka, 571-0057 (JP); HONDA, Yoshimasa, Osaka, 571-0057 (JP)
(74) Representative: Novagraaf International SA

(57) **Abstract**

An information processing method is a method to be executed by a computer. The information processing method includes obtaining a specification of an autonomous vehicle (5) about autonomous driving; obtaining a route for transporting a user; determining an operational design domain of the autonomous vehicle (5), based on the specification and the route; and outputting the determined operational design domain.

## Description

### [Technical Field]

The present disclosure relates to an information processing method and an information processing system.

### [Background Art]

For example, PTL 1 discloses an accidental risk visualizing system including an accidental risk visualizing processor which generates screen data including a warning symbol presented in a position indicated in map information included in warning history information, which indicates factors of accidental risks to a moving body, when it is determined that there is such warning history information; and an accidental risk display which displays a screen presentation based on the screen data received from the accidental risk visualizing processor after the screen data is generated.

PTL 2 discloses an information processing apparatus including an evaluator which evaluates a risk level of a specific area, based on a result of comparison between an aggregated value of data on a driving speed collected from a first vehicle group and an aggregated value of data on a driving speed collected from a second vehicle group.

### [Citation List]

### [Patent Literature]

[PTL 1] Japanese Unexamined Patent Application Publication No. 2018-032343
[PTL 2] Japanese Patent No. 6501258

### [Summary of Invention]

### [Technical Problem]

However, the traditional techniques may reduce the operational efficiencies in part of various autonomous vehicles having different specifications about driving. For example, in the techniques disclosed in PTLs 1 and 2, the data obtained from a plurality of vehicles is uniformly treated to calculate the risk. For this reason, the driving of high-performance vehicles may be excessively restricted while the total safety of the plurality of vehicles is increased. In other words, the operational efficiency of a vehicle may be reduced.

Thus, an object of the present disclosure is to provide an information processing method and an information processing system which enable suppression of a reduction in operational efficiency of an autonomous vehicle while the driving safety of the autonomous vehicle is ensured.

### [Solution to Problem]

The information processing method according to one aspect of the present disclosure is an information processing method to be executed by a computer. The information processing method includes obtaining a specification of an autonomous vehicle about autonomous driving; obtaining a route for transporting a person; determining an operational design domain of the autonomous vehicle, based on the specification and the route; and outputting the determined operational design domain.

Among these, part of specific aspects may be implemented using a system, a method, an integrated circuit, a computer program, or a computer-readable recording medium such as a CD-ROM, or may be implemented using any combination of a system, a method, an integrated circuit, a computer program, and a recording medium.

### [Advantageous Effects of Invention]

According to the information processing method according to the present disclosure, a reduction in operational efficiency of the autonomous vehicle can be suppressed while the driving safety of the autonomous vehicle is ensured.

### [Brief Description of Drawings]

[FIG. 1]

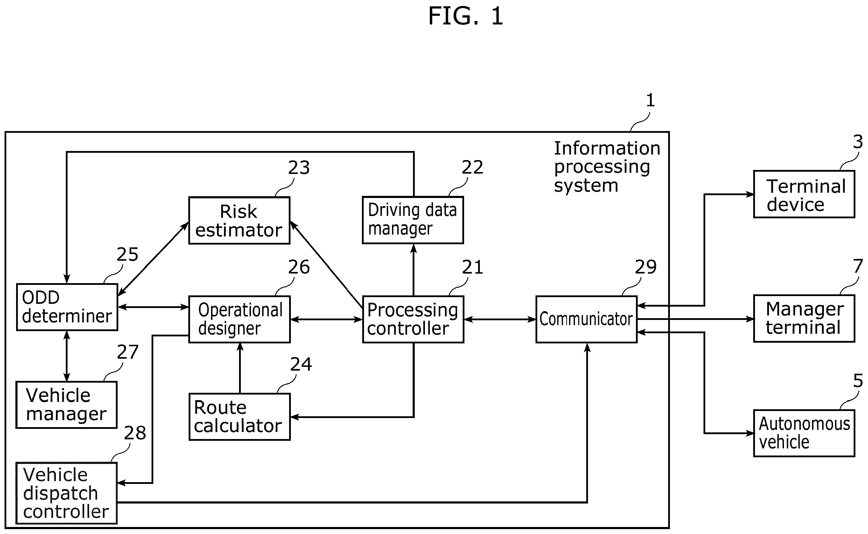

   FIG. 1 is a block diagram illustrating an information processing system according to an embodiment.
[FIG. 2]

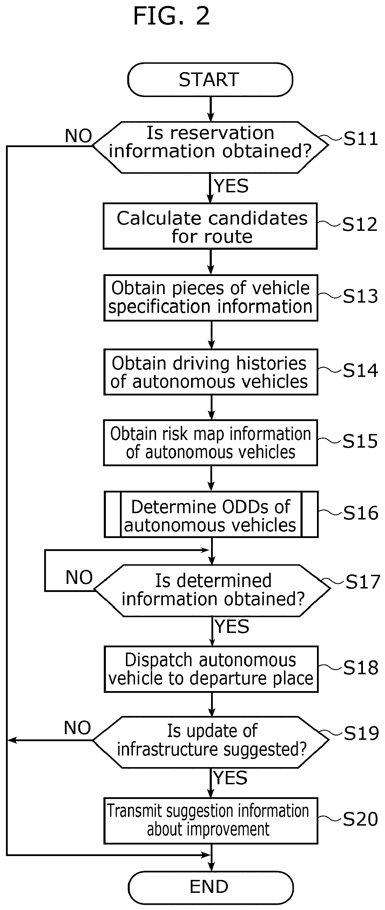

   FIG. 2 is a flowchart illustrating an operation of the information processing system according to the embodiment.
[FIG. 3]

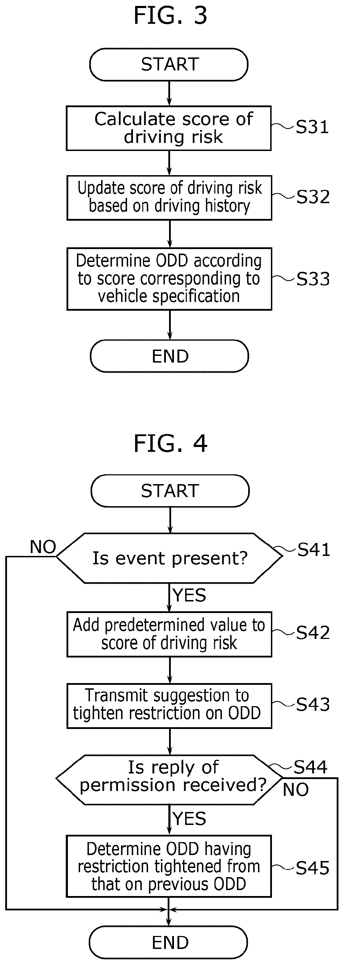

   FIG. 3 is a flowchart illustrating one example of the operation in the processing to determine an operational design domain.
[FIG. 4]
   FIG. 4 is a flowchart illustrating one example of an operation in the processing to update the score of a driving risk and the ODD.
[FIG. 5]

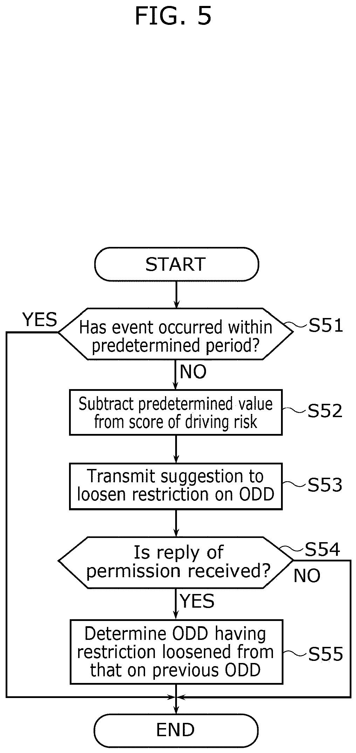

   FIG. 5 is a flowchart illustrating one example of another operation in the processing to update the score of the driving risk and the ODD.

### [Description of Embodiment]

The information processing method according to one aspect of the present disclosure is an information processing method to be executed by a computer. The information processing method includes obtaining a specification of an autonomous vehicle about autonomous driving; obtaining a route for transporting a person; determining an operational design domain of the autonomous vehicle, based on the specification and the route; and outputting the operational design domain determined.

In such a configuration, the operational design domain can be determined corresponding to not only the route but also the specification of the autonomous vehicle. As a result, for example, even in the same route, different operational design domains can be set to high-performance autonomous vehicles and low-performance autonomous vehicles, their performances being determined corresponding to their specifications.

Accordingly, this information processing method enables suppression of a reduction in operational efficiency of the autonomous vehicle while the driving safety of the autonomous vehicle is ensured.

The information processing system according to another aspect of the present disclosure includes a specification manager which manages a specification of an autonomous vehicle about autonomous driving; a route calculator which calculates a route for transporting a person; an operational design domain determiner which determines an operational design domain of the autonomous vehicle, based on the specification obtained from the specification manager and the route obtained from the route calculator; and an outputter which outputs the operational design domain determined.

This information processing system also has the same effects of action as those described above.

In the information processing method according to another aspect of the present disclosure, a driving risk in the route is obtained, the driving risk indicating a possibility that driving of the autonomous vehicle is obstructed. In the determination of the operational design domain, the operational design domain of the autonomous vehicle is determined based on the specification and the driving risk in the route.

In such a configuration, for example, because an autonomous vehicle having high performance is less likely to be affected by the driving risk, a relatively loosened operational design domain is determined for the autonomous vehicle. Because an autonomous vehicle having low performance is more likely to be affected by the driving risk, a relatively restricted operational design domain is determined. Thus, because influences on individual autonomous vehicles by the driving risk are varied, an operational design domain is determined for each autonomous vehicle such that the driving risk is suppressed. For this reason, a reduction in operational efficiency of the autonomous vehicle can be suppressed while the driving safety of the autonomous vehicle is ensured.

In the information processing method according to another aspect of the present disclosure, in the determination of the operational design domain, a score of the driving risk corresponding to the specification is obtained, and the operational design domain of the autonomous vehicle is determined according to the score.

In such a configuration, the operational design domain can be set according to the level of the driving risk corresponding to the specification about autonomous driving.

In the information processing method according to another aspect of the present disclosure, a driving history of the autonomous vehicle is obtained, and the score is updated based on the driving history.

In such a configuration, a more precise and accurate score of the driving risk is obtained as the autonomous vehicle drives longer. As a result, the operational design domain can be more appropriately determined according to the score.

In the information processing method according to another aspect of the present disclosure, in the updating of the score, an event during driving of the autonomous vehicle is extracted based on the driving history, and the score is updated according to the event extracted.

In such a configuration, by updating the score of the driving risk based on the driving history of the autonomous vehicle, the operational design domain is updated to be appropriate to the autonomous vehicle. Accordingly, autonomous vehicles can provide appropriate safety and efficiency based on their driving histories.

In the information processing method according to another aspect of the present disclosure, the driving history is a driving history of the autonomous vehicle in a route which the autonomous vehicle has driven or in a route similar to the route.

In such a configuration, an operational design domain appropriate to the autonomous vehicle can be determined by updating the score of the driving risk based on the driving history of the autonomous vehicle. Moreover, by updating the score based on the driving history of a similar route, an operational design domain having a certain level of appropriateness can also be determined with respect to the routes which the autonomous vehicle has not driven yet.

In the information processing method according to another aspect of the present disclosure, the driving history includes a driving control history indicating a result of driving control of the autonomous vehicle or a driving environment history indicating an external environment of the autonomous vehicle during driving of the autonomous vehicle.

In such a configuration, the precision and accuracy of the score of the driving risk can be more significantly increased based on the driving control history or the driving environment history.

In the information processing method according to another aspect of the present disclosure, in the determination of the operational design domain, a previous operational design domain is updated according to a state of update of the score.

In such a configuration, the operational design domain can be updated according to the update of the score. Thus, the operational design domain can be updated according to the presence/absence of the update or the content of the update.

In the information processing method according to another aspect of the present disclosure, in the determination of the operational design domain, a suggestion to loosen a restriction on the operational design domain is sent when a score after the updating is lower than a score before the updating, and an operational design domain having a restriction loosened from a restriction on the previous operational design domain is determined according to a reply to the suggestion.

In such a configuration, loosening of the restriction on the operational design domain can be sent to the manager of the autonomous vehicle (or an autonomous driving system) in the case of a low score of the driving risk. A judgement by the manager is considered because loosening of the restriction on the operational design domain may reduce the safety. Thus, in this configuration, the restriction on the operational design domain is loosened according to a reply from the manager. For this reason, a reduction in operational efficiency can be suppressed while the safety of the autonomous vehicle is ensured.

In the information processing method according to another aspect of the present disclosure, in the determination of the operational design domain, when the score after the updating is higher than the score before the updating, tightening of the restriction on the operational design domain is suggested or an operational design domain having a restriction tightened from the restriction on the previous operational design domain is determined.

In such a configuration, the restriction on the operational design domain can be tightened in the case of a high score of the driving risk. For this reason, the driving safety of the autonomous vehicle can be further ensured.

In the information processing method according to another aspect of the present disclosure, a suggestion to update an infrastructure on the route is sent according to the state of update of the score.

In such a configuration, it can be suggested to the manager of the autonomous vehicle that the restriction on the operational design domain is loosened by updating the infrastructure.

The embodiment described below illustrates one specific example of the present disclosure. Numeric values, shapes, materials, components, and arrangement positions of components shown in the embodiment below are exemplary, and should not be construed as limitations to the present disclosure. Moreover, among the components of the embodiment below, the components not described in an independent claim will be described as arbitrary components. In the embodiment, the contents can also be combined.

The information processing method and the information processing system according to one aspect of the present disclosure will now be specifically described with reference to the drawings.

### [Embodiment]

### <Configuration: information processing system 1>

FIG. 1 is a block diagram illustrating information processing system 1 according to an embodiment.

As illustrated in FIG. 1, information processing system 1 is a system which can dispatch autonomous vehicle 5 having an autonomous driving function and a manual driving function to a user in response to a request from the user. Information processing system 1 obtains information indicating the departure day and time, the departure place, and the destination from the user who uses terminal device 3. Thereby, based on the obtained information, information processing system 1 can dispatch autonomous vehicle 5 requested by the user. Autonomous vehicle 5 transits from an autonomous driving state to a manual driving, and vice versa. Information processing system 1, terminal device 3, one or more autonomous vehicles 5, and manager terminal 7 configure an autonomous driving system. The user is one example of a person who uses information processing system 1.

Information processing system 1 is applied to a form of sharing use of autonomous vehicle 5 provided in ride-sharing service or ride-hailing service, for example.

The ride-sharing service collectively indicates services for connecting a vehicle for transportation to a user who wants to ride the vehicle. In other words, the ride-sharing indicates a share ride of a vehicle such that a user who wants to go to a destination rides on a vehicle already having another user on board to transport the user from the departure place to the destination or a place near the destination.

The ride-hailing service indicates services which enable transportation of a user, who wants to go to a destination, from a designated place to the destination in response to a request from the user to dispatch a vehicle for transportation to the designated place. The ride-hailing service can also be turned to the ride-sharing service by allowing a share ride of another user during transportation of the user from the designated place to the destination.

The configuration of information processing system 1 will be specifically described.

Information processing system 1 includes processing controller 21, driving data manager 22, risk estimator 23, route calculator 24, operational design domain (ODD) determiner 25, operational designer 26, vehicle manager 27, vehicle dispatch controller 28, and communicator 29.

### [Processing controller 21]

Processing controller 21 controls driving data manager 22, risk estimator 23, route calculator 24, and operational designer 26 to set the operational design domain (hereinafter, referred to as ODD in some cases) of autonomous vehicle 5 by obtaining the driving history, the event information, and the vehicle ID from autonomous vehicle 5 through communicator 29. Processing controller 21 obtains these pieces of information at a predetermined interval from autonomous vehicle 5 which is driving a route. Processing controller 21 outputs the driving history and the vehicle ID to driving data manager 22 and outputs the event information to risk estimator 23.

Here, the driving history indicates the driving history of autonomous vehicle 5 in the route which autonomous vehicle 5 has driven. The driving history includes the driving control history and the driving environment history. The driving control history is the information indicating the results of the driving control of autonomous vehicle 5, such as the speed, the acceleration rate, the deceleration rate, the power consumption, the steering angle, the number of times of hard braking, and the driving time. The driving environment history is the information related with the road environments or external environments in which autonomous vehicle 5 has driven, such as the weather, the presence/absence of road construction, the road traffic, the road width, the traffic of pedestrians, the presence/absence of traffic accidents, the brightness of roads, and the number of close calls. The information on the driving control and the information on the road environments include the places and times corresponding to these pieces of information. The vehicle ID is an identifier for identifying autonomous vehicle 5. The vehicle ID is linked to the driving history and the event information. The event includes incidents which may result in serious events such as accidents, or accidental events such as accidents. The event information includes the place and time in which the event has occurred. The driving history may be a driving history of autonomous vehicle 5 in a route similar to the route that autonomous vehicle 5 has driven. The similar route indicates the route having a similar shape, a similar length, and a similar environment (such as brightness and the traffic).

Processing controller 21 obtains the reservation information of the user from terminal device 3 through communicator 29, and transmits the departure place information and the destination information included in the reservation information to route calculator 24. Here, the departure place information indicates the departure place of the user, and the destination information indicates the destination of the user. Processing controller 21 outputs the departure place information, the destination information, the departure time information indicating the time when the user departs the departure place, and the arrival time information indicating the arrival time when the user arrives at the destination, which are included in the reservation information, to operational designer 26. The departure time and the arrival time are arbitrarily output.

Here, the reservation information of for the user which plans to ride autonomous vehicle 5 includes the departure place information, the destination information, the departure time information, the arrival time information, the request information of the user, and the skill information indicating the driving skill. The request information is the information indicating the type of autonomous vehicle 5, the maximum number of passengers, the body size of the vehicle, and the presence/absence of the non-smoking car, for example. The skill information is the information such as the information indicating whether the use can drive autonomous vehicle 5 when autonomous vehicle 5 transits to the manual driving state (for example, whether the user has the driving license), and the total driving time.

When one or more candidates for autonomous vehicle 5 are selected to the reservation made by the user, processing controller 21 outputs the candidate information, which indicates the candidates for autonomous vehicle 5 fit for the reservation information of the user, to terminal device 3 through communicator 29.

### [Driving data manager 22]

Driving data manager 22 manages a plurality of driving histories of autonomous vehicles 5 by obtaining their driving histories and vehicle IDs from processing controller 21. Driving data manager 22 outputs the driving history of the target autonomous vehicle 5 in response to a request from ODD determiner 25.

### [Risk estimator 23]

Risk estimator 23 estimates the driving risk on the route based on the driving history of autonomous vehicle 5 managed by driving data manager 22. Specifically, risk estimator 23 generates the event information from the driving history. Based on the generated event information, risk estimator 23 estimates the driving risk of autonomous vehicle 5 with respect to the route indicated in the route information. The driving risk is shown as a score indicating the presence/absence of the risk or the level of the risk. Here, the driving risk indicates a possibility that the driving of autonomous vehicle 5 may be obstructed when autonomous vehicle 5 drives the route. The level of the driving risk is represented as a score. The score is an index indicating the level of the driving risk, and is calculated for each of specifications of autonomous vehicles 5. A high level of driving risk increases a possibility of switching to the manual driving state, stop of driving, or stop of the operation. Based on the obtained driving history, risk estimator 23 calculates the score of the driving risk corresponding to the specification of the vehicle. Specifically, risk estimator 23 generates pieces of event information based on the driving histories, and calculates the scores of the driving risks for the vehicle specifications according to the generated pieces of event information, respectively. For example, a score corresponding to the number of caused incidents is calculated for each of the vehicle specifications.

Risk estimator 23 estimates the driving risks, and maps the driving risks to a map indicated in the map information. Risk estimator 23 generates the risk map information, which is a map including the mapped driving risks, and outputs the generated risk map information to ODD determiner 25. The map information is preliminarily stored in information processing system 1.

Alternatively, risk estimator 23 may use the risk map information preset.

Risk estimator 23 may update the risk map information. Specifically, risk estimator 23 obtains the driving history, which is obtained by ODD determiner 25, from ODD determiner 25, and compares the driving risk indicated in the generated risk map information to that estimated from the driving history. When the driving risk indicated in the risk map information is different from that estimated from the driving history, risk estimator 23 updates the driving risk indicated in the risk map information.

Risk estimator 23 also obtains the driving history, and updates the score of the driving risk corresponding to the vehicle specification, based on the obtained driving history. Specifically, risk estimator 23 generates the event information based on the driving history, and updates the score of the driving risk according to the generated event information. For example, risk estimator 23 performs addition to the score when an incident occurs a predetermined number of times or beyond that for a predetermined period, and performs subtraction from the score when an incident has not occurred through the predetermined period. Because the driving risk may be varied even in the same place at the same time due to a change in the external environment, risk estimator 23 updates the risk map information by updating the score of the driving risk indicated in the risk map information. Risk estimator 23 outputs the updated risk map information to ODD determiner 25.

### [Route calculator 24]

Route calculator 24 obtains the departure place information and the destination information from processing controller 21, and calculates candidates for the route for transporting the user. For example, based on the map information stored in a memory device (not illustrated), route calculator 24 calculates one or more routes from the departure place of the user to the destination thereof. For example, route calculator 24 calculates a plurality of candidates for the route, such as the shortest route from the departure place of the user to the destination thereof and bypass routes calculated according to the road traffic. Route calculator 24 outputs the route information indicating the calculated candidates for the route to ODD determiner 25 through operational designer 26.

### [ODD determiner 25]

ODD determiner 25 as an operational design domain determiner determines the ODD of autonomous vehicle 5. Here, the ODD is a condition designed such that the autonomous driving system should function. The condition includes conditions related with geography, roads, environments, the traffic, the speed, temporary limitations, and the driving mode. The ODD is set such that the autonomous driving system normally operates when all the conditions are satisfied. In other words, the autonomous driving system is set without deviating from the ODD. When any one of the conditions is not satisfied, autonomous driving may be failed. For this reason, switching to the manual driving state or stop of driving is demanded.

Based on the vehicle specification information and the route information, ODD determiner 25 determines the corresponding ODD of autonomous vehicle 5 for each route. Specifically, ODD determiner 25 determines based on the vehicle specification and the driving risk of the route. More specifically, ODD determiner 25 obtains the score of the driving risk corresponding to the vehicle specification, and determines the ODD according to the score. For example, ODD determiner 25 obtains the score of the driving risk calculated by risk estimator 23 with respect to the route indicated in the route information, the score corresponding to the vehicle specification, and determines the ODD according to the score. The score may be calculated for each zone in the route, and the ODD for each zone may be determined corresponding to the score. ODD determiner 25 outputs the ODD determined for each route and each autonomous vehicle 5 to operational designer 26.

Furthermore, in the determination of the ODD, ODD determiner 25 updates the previous ODD according to the state of update of the score of the driving risk. When the score before the updating is lower than the score after the updating in the determination of the ODD, ODD determiner 25 transmits (sends) a suggestion to loosen the restriction on the ODD to manager terminal 7. When ODD determiner 25 receives a reply of permission to the suggestion from manager terminal 7, according to the reply of permission to the suggestion, ODD determiner 25 determines an ODD having a restriction loosened from that on the previous ODD. When the score after the updating is higher than the score before the updating in the determination of the ODD, ODD determiner 25 suggests tightening of the restriction on the ODD or determines an ODD having a restriction tightened from that on the previous ODD.

For example, even when the ODD at 25 km/h is originally set, ODD determiner 25 updates the ODD to 20 km/h in the case of a reduction in score, and updates the ODD to 30 km/h in the case of an increase in score.

### [Operational designer 26]

Operational designer 26 manages the operation of a plurality of autonomous vehicles 5.

Operational designer 26 obtains the ODDs from ODD determiner 25, and based on the determined ODDs, generates temporary operational design information when autonomous vehicles 5 drive the route. Operational designer 26 generates candidate information including candidate autonomous vehicles 5 and routes and the temporary operational design information thereof. Operational designer 26 transmits (sends) the candidate information to terminal device 3 through processing controller 21 and communicator 2. Here, the operational design information includes the departure place, the destination, the departure time, the goal time, the driving time, and the carfare. The candidate information may include merit or demerit information. For example, such information includes the ride time, the adaptability to the desired time zone, the quietness, the seat quality, and the usage fee. The candidate information may include demerits instead of or in addition to merits.

As a reply to the candidate information, operational designer 26 obtains the determined information indicating autonomous vehicle 5 and the route desired by the user from terminal device 3 through communicator 29 and processing controller 21. Operational designer 26 finalizes the operational design information based on autonomous vehicle 5 and the route indicated in the determined information.

Operational designer 26 outputs the suggestion to update the infrastructure according to the state of update of the score. Specifically, when the score increases or the score exceeds the threshold in every update thereof in a predetermined place on the map indicated in the risk map information, the predetermined place may have a problem. For this reason, operational designer 26 generates the suggestion information for suggesting the update of the infrastructure in the predetermined place. The suggestion information includes the predetermined place, the state of update of the score, repair of the infrastructure, extension thereof, and new installation thereof. The infrastructure includes roads, white lines, guard rails, signs, traffic signals, sidewalks, railroad crossings, and traffic mirrors. Operational designer 26 transmits the generated suggestion information to manager terminal 7 through communicator 29 and the like.

### [Vehicle manager 27]

As a specification manager, vehicle manager 27 manages the specifications of a plurality of autonomous vehicles 5 about autonomous driving. Here, the specification about autonomous driving indicates the vehicle type, the driving ability, the sensing ability, and the processing ability of autonomous vehicle 5. The vehicle type includes the category of the vehicle such as a sedan or a wagon, the size, and the shape. The driving ability includes the acceleration force, the maximum speed, the braking force, and the turning ability such as the minimum turning radius. The sensing ability includes the sensing distance, the sensing angle, the resolution, and the sensing target. The sensing may include detection of an object or a scene. The processing ability includes the processing rate, the number of tasks to be simultaneously processed, and the storage capacity. Other specifications include the driving ability of autonomous vehicle 5 such as a braking distance, detectable objects, the detecting ability such as a distance from autonomous vehicle 5 and the range from autonomous vehicle 5, the type of the vehicle, the maximum number of passengers, the type of the sensor installed, the type of the seat, the owner, the displacement, smoking/non-smoking, the gas mileage, the volume of the fuel tank, and the battery capacity. In response to a request from ODD determiner 25, vehicle manager 27 outputs the vehicle specification information indicating the specification of autonomous vehicle 5.

### [Vehicle dispatch controller 28]

When operational designer 26 finalizes the operational design information, vehicle dispatch controller 28 transmits a dispatch instruction command to autonomous vehicle 5 through communicator 29 to dispatch autonomous vehicle 5 indicated in the operational design information. In other words, vehicle dispatch controller 28 dispatches autonomous vehicle 5 indicated in the vehicle information to the departure place indicated in the departure place information at the time indicated in the departure time information. Here, the dispatch instruction command includes the vehicle information, the route information of the route that autonomous vehicle 5 will drive, the departure place information, the destination information, the departure time information, and the arrival time information.

Vehicle dispatch controller 28 transmits the dispatch instruction command to autonomous vehicle 5 and transmits reservation result information to terminal device 3 through communicator 29. The reservation result information indicates a result of the accepted reservation of the vehicle which satisfies the conditions desired by the user, such as autonomous vehicle 5, the route information, the departure place information, the destination information, the departure time information, and the arrival time information.

### [Communicator 29]

Communicator 29 wirelessly or wiredly communicates with terminal device 3 and autonomous vehicle 5 through a network not illustrated. As an outputter, communicator 29 transmits (outputs) the candidate information to terminal device 3. Communicator 29 receives the reservation information from terminal device 3, and receives the determined information from terminal device 3. Moreover, when vehicle dispatch controller 28 determines autonomous vehicle 5 to be dispatched, communicator 29 transmits the dispatch instruction command to the determined autonomous vehicle 5, transmits the reservation result information to terminal device 3, and transmits the suggestion information to manager terminal 7. Communicator 29 may also transmit the reservation result information to manager terminal 7. Communicator 29 is one example of a sender.

### [Terminal device 3]

Terminal device 3 is a personal computer, a smartphone, or a tablet terminal communicably connected to information processing system 1 through a network or the like. By accepting a reservation input from the user with respect to the dispatch of autonomous vehicle 5, terminal device 3 transmits the reservation information to information processing system 1 or receives the candidate information generated by operational designer 26. Terminal device 3 also displays the candidates for autonomous vehicle 5 and those for the route indicated in the candidate information. Terminal device 3 generates the determined information, which is determined by the user through the operation unit and indicates the determined autonomous vehicle 5 and route, and transmits the generated determined information to information processing system 1.

When terminal device 3 obtains the reservation result information, terminal device 3 receives and presents the conditions which the user desires, such as desired autonomous vehicle 5, route information, departure place information, destination information, departure time information, and arrival time information. The presentation may be performed by display or a notification using a voice output or the like.

### [Autonomous vehicle 5]

Autonomous vehicle 5 is a vehicle communicably connected to information processing system 1 through a network or the like. According to the driving environment, autonomous vehicle 5 transits from the autonomous driving state to the manual driving state, and vice versa. For example, in an environment having difficulties in autonomous driving, in order to switch autonomous driving to manual driving, autonomous vehicle 5 recommends the user to perform manual driving.

### [Manager terminal 7]

Manager terminal 7 is a personal computer, a smartphone, or a tablet terminal communicably connected to information processing system 1 through a network or the like. When manager terminal 7 obtains the suggestion information from ODD determiner 25, manager terminal 7 presents the obtained suggestion information to a manager. For example, the suggestion information includes the suggestion to update the infrastructure as described above and a suggestion to update the ODD described later. The presentation of the suggestion information by manager terminal 7 can increase the possibility of an improvement in operational efficiency of autonomous vehicle 5.

As described above, manager terminal 7 presents the suggestion to update the ODD obtained from information processing system 1. For example, when manager terminal 7 obtains the suggestion to loosen the restriction on the ODD from information processing system 1, manager terminal 7 presents the suggestion, and demands the manager for the determination of whether the manager permits the update of the ODD. When the manager permits the update, manager terminal 7 transmits a reply of permission to the suggestion to information processing system 1. When the manager refuses the update, manager terminal 7 transmits a reply of refusal to the suggestion to information processing system 1.

### <Operation>

The operation of information processing system 1 having such a configuration will be described with reference to FIG. 2.

FIG. 2 is a flowchart illustrating the operation of information processing system 1 according to the embodiment.

As illustrated in FIG. 2, the reservation information such as the departure place and the destination of the user is input by terminal device 3 operated by the user. Terminal device 3 transmits the reservation information to information processing system 1. To be noted, at least one of the departure time in the departure place or the arrival time to arrive the destination may be input.

Initially, processing controller 21 in information processing system 1 determines whether the reservation information is obtained (S11). When processing controller 21 does not obtain the reservation information of the user (NO in S11), information processing system 1 terminates the processing.

When processing controller 21 obtains the reservation information of the user (YES in S11), route calculator 24 obtains the departure place information and the destination information from processing controller 21. Route calculator 24 calculates one or more routes from the departure place of the user to the destination thereof based on the map information, the departure place information, and the destination information stored in a memory device or the like. In other words, route calculator 24 calculates the candidates for the route for transporting the user (S12). Route calculator 24 outputs the route information, which indicates the calculated candidates for the route, to ODD determiner 25 through operational designer 26.

ODD determiner 25 obtains pieces of vehicle specification information from vehicle manager 27, the pieces of vehicle specification information corresponding to the vehicle IDs of one or more autonomous vehicles 5 which are included in a plurality of autonomous vehicles 5 and are assigned to transportation of the user (S13).

ODD determiner 25 also obtains the driving histories of autonomous vehicles 5 from driving data manager 22 (S14).

Risk estimator 23 generates pieces of event information from the driving histories of autonomous vehicles 5 managed by driving data manager 22, and based on the generated pieces of event information, estimates the driving risks of autonomous vehicles 5 with respect to the route indicated in the route information. Risk estimator 23 maps the estimated driving risks of autonomous vehicles 5 to the map presented in the map information. Risk estimator 23 generates the risk map information, which is a map including the mapped driving risks, and outputs the generated risk map information to ODD determiner 25. Thus, ODD determiner 25 obtains the risk map information of autonomous vehicles 5 (S15).

The processings in steps S12 and S13 may be performed in parallel.

ODD determiner 25 determines the ODDs of the one or more autonomous vehicles 5 based on the scores of the driving risks indicated in the risk map information (S16). ODD determiner 25 outputs the determined ODDs to operational designer 26. When operational designer 26 obtains the ODDs determined by ODD determiner 25, operational designer 26 generates pieces of operational design information corresponding the ODDs. Operational designer 26 generates candidate autonomous vehicles 5 and routes, and the candidate information including pieces of temporary operational design information of candidate autonomous vehicles 5 and routes. Operational designer 26 transmits the candidate information to terminal device 3 through processing controller 21 and communicator 29.

When terminal device 3 obtains the candidate information, terminal device 3 displays the candidate information. Then, the user selects desired autonomous vehicle 5 and a desired route from the transmitted candidate information. Terminal device 3 transmits the determined information including the determined candidate autonomous vehicle 5 and route to information processing system 1. Terminal device 3 may transmit the determined information to manager terminal 7.

Information processing system 1 determines whether the determined information is obtained (S17).

When information processing system 1 does not obtain the determined information (NO in S17), information processing system 1 returns the processing to step S17. When the determined information is not obtained even after a predetermined period of time has passed, information processing system 1 may terminate the processing.

When information processing system 1 obtains the determined information (YES in S17), operational designer 26 in information processing system 1 outputs the determined information to vehicle dispatch controller 28. When obtaining the determined information from operational designer 26, vehicle dispatch controller 28 transmits the dispatch instruction command to autonomous vehicle 5 through communicator 29 to dispatch autonomous vehicle 5 indicated in the obtained determined information. In other words, vehicle dispatch controller 28 controls to dispatch autonomous vehicle 5 indicated in the vehicle information in the determined information to the departure place (S18). Thereby, autonomous vehicle 5 which receives the dispatch instruction command moves to arrive at the departure place at the departure time.

Moreover, according to the state of update of the score of the driving risk indicated in the risk map information, operational designer 26 determines whether to suggest the update of the infrastructure (S19). For example, in the risk map information, places having significantly high scores and those having scores increased after every update are considered as places having some problems. In other words, there are some problems in the places when their scores of the driving risks indicated in the risk map information are higher than or equal to a predetermined value, the scores higher than or equal to the predetermined value are continuing for a predetermined period, or the number of times that the scores exceed the predetermined value is higher than or equal to a predetermined number of times. When the risk map information includes the places having such scores, operational designer 26 determines a suggestion to update (YES in S19), and outputs a suggestion to update the infrastructure according to the state of update of the scores. In other words, operational designer 26 generates suggestion information to suggest the update of the place having such a score. When operational designer 26 determines not to suggest the update (NO in S19), information processing system 1 terminates the processing.

Operational designer 26 transmits the generated suggestion information to manager terminal 7 (S20). Information processing system 1 then terminates the processing.

Next, the processing to determine the ODD in step S16 illustrated in FIG. 2 will be specifically described with reference to FIG. 3.

FIG. 3 is a flowchart illustrating one example of the operation in the processing to determine the ODD.

As illustrated in FIG. 3, risk estimator 23 calculates the score of the driving risk based on the risk map information and the vehicle specification information (S31). Specifically, risk estimator 23 calculates the score of the driving risk corresponding to the vehicle specification of autonomous vehicle 5 according to the driving risk mapped to the risk map information and the vehicle specification.

For example, because a high-performance autonomous vehicle 5 readily avoids the driving risk, risk estimator 23 generates a low score of the driving risk through calculation corresponding to the vehicle specification of autonomous vehicle 5.

Because a low-performance autonomous vehicle 5 is difficult to avoid the driving risk, risk estimator 23 generates a high score of the driving risk through calculation corresponding to the vehicle specification of autonomous vehicle 5.

The vehicle specification having a score already calculated is exempted from the score calculation processing.

Risk estimator 23 obtains the driving history of autonomous vehicle 5 from driving data manager 22, and updates the score of the driving risk based on the obtained driving history (S32).

ODD determiner 25 determines the ODD of autonomous vehicle 5 according to the score corresponding to the vehicle specification of autonomous vehicle 5 (S33).

The score of the driving risk and the update of the ODD will be described with reference to FIG. 4.

FIG. 4 is a flowchart illustrating one example of the operation to update the score of the driving risk and the ODD.

As illustrated in FIG. 4, based on the driving history of autonomous vehicle 5, risk estimator 23 determines whether an event has occurred (is present) (S41). For example, risk estimator 23 determines whether an incident such as hard braking or a close call or an accidental event such as an accident has occurred.

When risk estimator 23 determines that such an event has occurred (YES in S41), risk estimator 23 adds a predetermined value to the score of the driving risk in the place where the event has occurred (S42).

Based on the updated score indicated in the risk map information, ODD determiner 25 transmits a suggestion to tighten the restriction on the ODD to manager terminal 7 through communicator 29 (S43).

ODD determiner 25 determines whether a reply of permission to the transmitted suggestion is received (S44).

When the reply of permission to the suggestion is received from manager terminal 7 (YES in S44), ODD determiner 25 updates the ODD of the event-occurring place according to the score of the driving risk added by risk estimator 23. Specifically, ODD determiner 25 determines an ODD having a restriction tightened from that on the previous ODD because the score after the updating is higher than the score before the updating (S45).

When the reply of permission to the suggestion is not received from manager terminal 7 (NO in S44) and when it is determined that any event does not occur (NO in S41), information processing system 1 causes the processing to go to the next processing in the flowchart.

Next, another example of the score of the driving risk and the update of the ODD will be described with reference to FIG. 5.

FIG. 5 is a flowchart illustrating one example of another operation in the processing to update the score of the driving risk and the ODD.

As illustrated in FIG. 5, based on the driving history, risk estimator 23 determines whether an event has occurred within a predetermined period of time (S51).

When it is determined that there is no occurrence of any event within the predetermined period of time (NO in S51), risk estimator 23 subtracts a predetermined value from the score of the driving risk in the place where the event has occurred (S52). The score can be caused to approximate to the actual value in the case where the actual score is lower than the score initially set.

Based on the updated score indicated in the risk map information, ODD determiner 25 transmits a suggestion to loosen the restriction on the ODD to manager terminal 7 through communicator 29 (S53).

ODD determiner 25 determines whether a reply of permission to the transmitted suggestion is received (S54).

When the reply of permission to the suggestion is received from manager terminal 7 (YES in S54), ODD determiner 25 updates the ODD of the event occurring place corresponding to the score of the driving risk subtracted by risk estimator 23. Specifically, ODD determiner 25 determines an ODD having a restriction loosened from that on the previous ODD because the score after the updating is lower than the score before the updating (S55).

When the reply of permission to the suggestion is not received from manager terminal 7 (NO in S54) and when it is determined that an event has occurred within a predetermined period of time (YES in S51), information processing system 1 causes the processing to go to the next processing in the flowchart.

### <Effects of action>

The effects of action of the information processing method and information processing system 1 according to the present embodiment will now be described.

As described above, the information processing method and information processing system 1 according to the present embodiment can determine the ODD corresponding to the specification of autonomous vehicle 5 and the route. Thus, the operational design domain can be determined corresponding to not only the route but also the specification of the autonomous vehicle. As a result, for example, even in the case of the same route, different ODDs can be set to a high-performance autonomous vehicle 5 and a low-performance autonomous vehicle 5. Specifically, because autonomous vehicle 5 having high performance is less likely to be affected by the driving risk, a relatively loosened ODD is determined for such autonomous vehicle 5. Because autonomous vehicle 5 having low performance is readily affected by the driving risk, a relatively restricted ODD is determined. Thus, different ODDs can be determined according to the vehicle specifications with respect to the same driving risk. For this reason, a reduction in operational efficiency of autonomous vehicle 5 can be suppressed while the driving safety of autonomous vehicle 5 is ensured.

### (Other modifications)

Although the present disclosure has been described as above based on the embodiment, the embodiment should not be construed as limitations to the present disclosure.

For example, the information processing method and the information processing system according to the embodiment may be implemented by a program using a computer, and such a program may be stored in a memory device.

Moreover, the information processing method and the processors included in the information processing system according to the embodiment are implemented with LSIs, which are typical integrated circuits. These integrated circuits may be individually formed into single chips, or part or all of the integrated circuits may be formed into a single chip.

The integrated circuits may be implemented not only by LSIs but also by dedicated circuits or general purpose processors. A field programmable gate array (FPGA) programmable after production of the LSI or a reconfigurable processor which allows circuit cells in the LSI to be reconnected and reconfigured may also be used.

The components in the embodiment may be configured of dedicated hardware, or may be implemented by executing software programs suitable for the components. The components may be implemented by a program executer such as a CPU or a processor which reads out and executes software programs recorded on a recording medium such as a hard disk or a semiconductor memory.

The numeric values used above are all exemplified to specifically describe the present disclosure, and should not be construed as limitations to the embodiment according to the present disclosure.

The division of the functions into the functional blocks in the block diagram is one example. A plurality of functional blocks may be implemented as one functional block, one functional block may be divided into several functional blocks, or part of the functions may be moved to another functional block. Moreover, in a plurality of functional blocks having similar functions, the functions may be subjected to parallel or time-sharing processing by a single piece of hardware or software.

The order of the steps to be executed in the flowchart is exemplified to specifically describe the present disclosure, and the steps may be executed in any other order. Alternatively, part of the steps may be executed concurrently with another step (in parallel).

Besides, the present disclosure also covers embodiments obtained from a variety of variations of the embodiment conceived by persons skilled in the art, and embodiments implemented with any combination of the components and functions in the embodiment without departing the gist of the present disclosure.

### [Industrial Applicability]

The present disclosure can be used in autonomous vehicles, apparatuses for remotely operating autonomous vehicles, terminal devices which present the states of autonomous vehicles, or systems including these.

### [Reference Signs List]

- 1: information processing system
- 5: autonomous vehicle
- 24: route calculator
- 25: ODD determiner
- 27: vehicle manager (specification manager)
- 29: communicator (outputter)

## Claims

1. An information processing method to be executed by a computer, the information processing method comprising:
obtaining a specification of an autonomous vehicle (5) about autonomous driving;
determining an operational design domain of the autonomous vehicle (5), based on the specification;
outputting the operational design domain determined;
wherein the specification includes a vehicle type, driving ability, sensing ability, and processing ability of the autonomous vehicle (5), the information processing method further comprising:
obtaining a driving risk indicating a possibility that driving of the autonomous vehicle (5) is obstructed,
wherein in the determining of the operational design domain, the operational design domain of the autonomous vehicle (5) is determined based on the specification and the driving risk,
wherein in the determining of the operational design domain,
a score of the driving risk corresponding to the specification is obtained, and
the operational design domain of the autonomous vehicle (5) is determined according to the score, the information processing method further comprising:
obtaining a driving history of the autonomous vehicle (5); and
updating the score based on the driving history,
wherein in the updating of the score,
an event during driving of the autonomous vehicle (5) is extracted based on the driving history, and
the score is updated according to the event extracted.

2. The information processing method according to claim 1,
wherein the driving history is a driving history of the autonomous vehicle (5) or a driving history similar to the driving history of the autonomous vehicle (5).

3. The information processing method according to any one of claims 1 to 2,
wherein the driving history includes a driving control history indicating a result of driving control of the autonomous vehicle (5) or a driving environment history indicating an external environment of the autonomous vehicle (5) during driving of the autonomous vehicle.

4. The information processing method according to claim 1,
wherein in the determining of the operational design domain, a previous operational design domain is updated according to a state of update of the score.

5. The information processing method according to claim 4,
wherein in the determining of the operational design domain,
a suggestion to loosen a restriction on the operational design domain is sent when a score after the updating is lower than a score before the updating, and
an operational design domain having a restriction loosened from a restriction on the previous operational design domain is determined according to a reply to the suggestion.

6. The information processing method according to claim 4 or 5,
wherein in the determining of the operational design domain, when the score after the updating is higher than the score before the updating, tightening of the restriction on the operational design domain is suggested or an operational design domain having a restriction tightened from the restriction on the previous operational design domain is determined.

7. The information processing method according to any one of claims 1 to 6, further comprising:
sending a suggestion to update an infrastructure according to the state of update of the score.

8. An information processing system (1), comprising:
a specification manager (27) which manages a specification of an autonomous vehicle (5) about autonomous driving;
an operational design domain determiner (25) which determines an operational design domain of the autonomous vehicle (5), based on the specification obtained from the specification manager (27); and
an outputter (29) which outputs the operational design domain determined,
wherein the specification includes a vehicle type, driving ability, sensing ability, and processing ability of the autonomous vehicle (5),
the information processing system (1) further comprising a risk estimator (23) which obtains a driving risk indicating a possibility that driving of the autonomous vehicle (5) is obstructed,
wherein in the determining of the operational design domain, the operational design domain of the autonomous vehicle (5) is determined based on the specification and the driving risk,
wherein in the determining of the operational design domain, a score of the driving risk corresponding to the specification is obtained, and the operational design domain of the autonomous vehicle (5) is determined according to the score,
wherein the risk estimator (23) further obtains a driving history of the autonomous vehicle (5) and updates the score based on the driving history,
wherein in the updating of the score,
an event during driving of the autonomous vehicle (5) is extracted based on the driving history, and
the score is updated according to the event extracted.
